# EUROPEAN PATENT SPECIFICATION

(11) **EP 2 719 612 B1**
(45) Date of publication and mention of the grant of the patent: **15.07.2015**
(21) Application number: 13187925.6
(22) Date of filing: 09.10.2013
(51) Int. Cl.: B62J 17/00, B62J 27/00

(54) **Saddle-straddling type motor vehicle**
Spreizsattelmotorfahrzeug
Véhicule à moteur de type à enfourcher

(30) Priority: 10.10.2012 JP 2012225369
(43) Date of publication of application: 16.04.2014
(73) Proprietor: Yamaha Hatsudoki Kabushiki Kaisha, Iwata-shi, Shizuoka-ken 438-8501 (JP)
(72) Inventor: Takahashi, Kuniyuki, Shizuoka-ken, 438-8501 (JP); Tsuji, Masayuki, Shizuoka-ken, 438-8501 (JP)
(74) Representative: Zimmermann, Tankred Klaus

(56) References cited:
- EP-A1- 1 640 257
- EP-A1- 1 767 444
- EP-A1- 1 772 359
- EP-A1- 2 301 832
- JP-A- H09 323 690
- JP-A- 2009 220 664
- JP-A- 2010 228 572
- JP-A- 2011 148 446

## Description

### BACKGROUND OF THE INVENTION

### Field of the Invention

The present invention relates to a saddle-straddling type motor vehicle that includes a grip member, which a rider can grasp.

### Description of Related Art

There is a motorcycle that includes a grip member, which a rider can grasp. In this case, the rider can adjust a posture at the time of getting on the motorcycle while grasping the grip member, for example. Further, the rider can put down a motorcycle stand while grasping the grip member, for example. When the rider performs such an operation, relatively large stress is exerted on the grip member.

A motorcycle that includes a grab-bar as the grip member is described in JP 4097279 B. In the motorcycle described in JP 4097279 B, the grab-bar and a seat cowl are integrally formed. The grab-bar has a bar-shaped grip that projects outward of a vehicle body and extends rearward of the vehicle body from the front of the seat cowl. Further, the grab-bar has a stay that couples the seat cowl and the grip.

JP 2010 228572 A, on which the preamble of present claim 1 is based, describes a saddle-ride type vehicle to which a rear grip and a rear cover is fixed with a simple structure and in which a vibration between the rear grip and the rear cover is prevented. The saddle-ride type vehicle includes the rear cover covering the rear of the vehicle, the rear grip covered with the rear cover, and vertical ribs formed on the rear cover and arranged to abut on the rear grip. The rear cover is formed to sandwich the rear grip from the upper and lower sides. The vertical ribs formed on the upper and lower surfaces of the inner surface of the rear cover are bought into contact with only the upper surface and lower surface of the rear grip in order to sandwich the rear grip.

EP 2 301 832 A1 describes a vehicle rear structure which includes a body cover covering a vehicle body, a rear grip body attached to a vehicle-body frame and allowing an occupant to hold the rear grip body, and a rear grip cover attached to the rear grip body and covering the rear grip body. A part of the body cover overlaps a top surface of the rear grip body. The rear grip body is provided with a body cover positioning section for positioning the body cover, and the rear grip cover lies above the body cover positioning section to cover it.

JP 2009 220664 A describes a soft grab rail structure for a saddle-riding type vehicle, which is easy to grip and capable of ensuring strength-rigidity. In the saddle-ride type vehicle having a grab rail gripped by an occupant and mounted to a rear part of a vehicle body frame, the grab rail is formed by a rod-like core material made of metal, a core material comprising outer plate-like core materials made of metal joined to an outer side in a vehicle width direction of the rod-like core material, descended as it advances to an outer side of a vehicle body and having thinner plate thickness than an outer shape of the rod-like core material; and a rubber covering the core material or a covering material made of resin.

### BRIEF SUMMARY OF THE INVENTION

An object of the present invention is to provide a saddle-straddling type motor vehicle that includes a grip in which a size is reduced and sufficient strength is ensured.

This object is achieved by a saddle-straddling type motor vehicle according to claim 1.

As described above, relatively large stress may be exerted on the grip member. In the motorcycle described in JP 4097279 B, the grip of the grab-bar projects outward of the vehicle body. In this case, the sizes of cross sectional areas of the grip and the stay need to be increased in order to ensure the strength of the grip. Therefore, the size of the grab-bar increases.
(1) According to one aspect of the present invention, a saddle-straddling type motor vehicle includes a seat, a seat frame that supports the seat, and a pair of right and left side covers made of resin arranged to cover at least part of the seat frame from outside in a vehicle width direction, wherein the pair of side covers includes a pair of right and left grip covers fixed to the seat frame, and a pair of right and left front covers respectively fixed to the pair of grip covers to extend forward from front ends of the pair of grip covers, and each of the grip covers has a projection arranged outside the seat in the vehicle width direction and has a recess at a lower surface of the projection. The strength of a resin material of the pair of grip covers may be higher than strength of a resin material of the pair of front covers.
   A rider who sits in the rear portion of the seat can grasp the projections by inserting fingers into the recesses of the lower surfaces of the projections of the pair of grip covers. Thus, the projections and the recesses of the grip covers function as grip members.
   When the bar-shaped grip members are provided at the side covers to project outward from the side covers, a large stress is likely to be exerted on the portions of the grip members to be grasped by the rider and the coupling portions between the grip members and the side covers. Therefore, the sizes of the cross sectional areas of the portions of the grip members to be grasped and the coupling portions between the grip members and the side covers need to be increased. Therefore, it is difficult to reduce the size of the grip members.
   In contrast, in the pair of grip covers of the present invention, the projection and the recess of each of the grip covers function as the grip member as described above, so that the areas of the coupling portion between the portion that functions as the grip member and another portion that has the essential function of the side cover is easily ensured. Further, the portion that functions as the grip member is not spaced apart from another portion in the vehicle width direction as compared to the case in which the bar-shaped grip member is provided at the side cover to project outward from the side cover. Therefore, the portion that functions as the grip member can be prevented from largely projecting in the vehicle width direction. As a result, the grip member in which the size is reduced and sufficient strength is ensured can be realized.
   Further, strength required as the grip member does not have to be ensured in the front covers that are other parts of the side covers. Therefore, strength of the necessary part of the side covers can be ensured while an increase in size of the side covers is avoided.
   Further, because the pair of grip covers as the grip members is one portion of the pair of side covers, it is possible to reduce the number of components compared to the case in which the grip members are separately provided at the side covers.
   Further, the projections and the recesses that function as the grip members can be simultaneously formed at the time of formation of the grip covers, whereby the number of assembling steps is reduced compared to the case in which the grip members are separately provided at the side covers.
   As a result, the function as the grip members in which the strength is ensured can be realized while the sizes of the side covers, the number of components and the number of assembling steps are reduced.
   Further, only the strength of the pair of grip covers of the side covers that include the grip covers and the front covers can be improved. It is not necessary to use expensive resin material that has high strength for the entire side covers, whereby an increase in the manufacturing cost of the saddle-straddling type motor vehicle can be prevented.
(2) The straddling type motor vehicle further may further include a lower cover provided below the pair of side covers, wherein an outer surface of the lower cover may be positioned inside outermost portions of the pair of grip covers in the vehicle width direction.
   In this case, it is possible to arrange the vehicle component members in a space within the lower cover without increasing the size of the saddle-straddling type motor vehicle in the vehicle width direction. Therefore, flexibility in layout of the vehicle component members can be improved while reduction in size of the side covers is realized.
(3) At least part of an upper end of the lower cover may be positioned above lower ends of the recesses of the pair of grip covers, outside inner ends of the recesses in the vehicle width direction and inside outer ends of the recesses in the vehicle width direction.
   In this case, deformation of the lower cover is prevented by the pair of grip covers. Specifically, even when at least part of the upper end of the lower cover is deformed inward or outward in the vehicle width direction, the deformation is restricted by the recesses.
(4) The seat may have a seating surface and a pair of side surfaces that extends downward from an outer end edge of the seating surface in the vehicle width direction, and fixing portions for fixing of the pair of front covers and the pair of grip covers may be arranged inside the pair of side surfaces in the vehicle width direction.
   In this case, the fixing portions for fixing of the pair of front covers and the pair of grip covers are covered by the pair of side surfaces of the seat. Thus, the fixing portions for fixing of the pair of front covers and the pair of grip covers are not exposed, so that vandalism such as disassembly of the fixing portions or the like, or theft of a vehicle component member or the like can be prevented.
(5) Each of the front covers may have a long hole, and each of the front covers may be fixed to the seat frame by a fixing member inserted into the long hole.
   An error may occur in the fixed positions of the pair of front covers with respect to the seat frame due to an attachment error of the pair of grip covers to the seat frame, or variations in size of pairs of grip covers and pairs of front covers.
   Even in such a case, each of the front covers is fixed to the seat frame by the fixing member inserted into the long hole, so that an error in the fixed position of the front cover with respect to the seat frame is absorbed. Therefore, the pair of grip covers and the pair of front covers that are shifted are prevented from being fixed to the seat frame.
(6) The long hole may be formed such that a length in the vehicle front and rear direction is larger than a length in the vehicle up-and-down direction and the long hole extends in the vehicle front and rear direction.
   In this case, the long hole is formed to extend in the vehicle front and rear direction such that an error that occurs in the vehicle front and rear direction is easily absorbed.
(7) A step in which an outer surface of the grip cover projects with respect to an outer surface of the front cover in the vehicle width direction may be formed at a boundary portion between each of outer surfaces of the front covers and each of outer surfaces of the grip covers.
   Even if the shapes of the pair of front covers and the pair of grip covers are designed such that a step is not formed at the boundary portion, the step may be formed at a plurality of portions of the boundary portion due to variations in shape that occurs when pairs of front covers and pairs of grip covers are respectively formed. For example, a step portion in which the outer surface of each grip cover projects outward from the outer surface of each front cover, and a step portion in which the outer surface of the front cover projects outward from the outer surface of the grip cover may be formed in an irregular manner. In this manner, appearance of the side covers is impaired if different steps at the boundary portions occur.
   The configuration described above causes the step in which the outer surface of the grip cover projects outward from the outer surface of the front cover in the vehicle width direction to be formed in advance at the boundary portion. Therefore, the appearance of the side covers is prevented from being impaired.
(8) Each grip cover may have an outer wall portion that constitutes an outer wall of the recess in the vehicle width direction, and the outer wall portion may have a portion in which a thickness in a horizontal direction increases.
   In this case, the outer wall portion functions as the grip member. At least part of the outer wall portion can easily ensure the strength required as the grip member due to an increase in thickness in the horizontal direction.
(9) Each grip cover may have an upper wall portion that constitutes an upper wall of the recess, and a surface of the upper wall portion may have a curved surface that protrudes outward.
   In the projection that has a recess, a dent may occur at the surface of the upper wall portion of the recess at the time of formation of the grip cover due to a difference between the thickness of the outer wall and the thickness of the inner wall of the recess. Further, if the thickness in the vehicle width direction and the vehicle up-and-down direction of the portion that functions as the grip member is designed to be relatively large in order to ensure sufficient strength in the portion that functions as the grip member, a dent may occur at the surface of the upper wall portion of the recess at the time of formation of each grip cover. Even in such a case, the surface of the upper wall portion has a curved surface that protrudes outward such that a dent that occurs at the surface of the upper wall portion can be made inconspicuous.
(10) The saddle-straddling type motor vehicle may further include a tail light supported at the pair of side covers via dampers.
   When the tail light is fixed to the seat frame, there is a possibility that the tail light cannot be fixed to the seat frame due to an error in the fixed position of the tail light if there are variations in size of tail lights. On the other hand, even if are variations in size of tail lights, pairs of side covers and seat frames, the configuration described above causes the error in the fixed position of the tail light due to the variations in size to be absorbed by the dampers. Therefore, assemblage of the tail light, the pair of side covers and the seat frame can be improved.
   Further, the tail light may be supported by the pair of grip covers of the pair of side covers via the dampers. In this case, the pair of grip covers is positioned behind the front covers, so that the tail light can be easily arranged in the rear portion of the saddle-straddling type motor vehicle.
(11) The saddle-straddling type motor vehicle may further include a tail light cover provided above the tail light, wherein the tail light cover may be fixed to the seat frame and may be supported by the pair of side covers.
   In this case, the tail light cover is supported by the seat frame and the pair of side covers. Thus, the tail light is reliably protected.
(12) At least one of the pair of grip covers may have a helmet hanger inside the projection in the vehicle width direction.

In this case, the pair of grip covers can be integrally formed with the helmet hanger.

The present invention enables the grip of the saddle-straddling type motor vehicle in which the size is reduced and sufficient strength is ensured to be realized.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWING

Fig. 1 is a side view of one side of a motorcycle according to one embodiment of the present invention;
Fig. 2 is a plan view of the motorcycle of Fig. 1 as viewed from above;
Figs. 3(a) to 3(c) are diagrams for explaining the function of a grip cover;
Fig. 4 is a partially exploded side view showing a left sub-frame, a left central cover, a cover member, a left side cover and a lower cover;
Fig. 5 is a partially enlarged side view of the motorcycle as viewed from a transparent seat;
Fig. 6 is a partially enlarged plan view of the motorcycle as viewed from the transparent seat;
Fig. 7(a) is a vertical cross sectional view taken along the line J-J of Fig. 6;
Fig. 7(b) is a vertical cross sectional view taken along the line K-K of Fig. 6;
Fig. 8(a) is a partially enlarged plan view of the motorcycle as viewed from a transparent tail light cover;
Fig. 8(b) is a partially enlarged side view of one support plate of Fig. 8(a);
Fig. 8(c) is a partially enlarged plan view of the motorcycle mainly showing the tail light cover;
Fig. 9 is a partially enlarged plan view of the motorcycle showing one usage example of a helmet hanger as viewed from the transparent seat; and
Fig. 10 is a vertical cross sectional view taken along the line N-N of Fig. 6.

### DESCRIPTION OF THE PREFERRED EMBODIMENTS

A saddle-straddling type motor vehicle according to one embodiment of the present invention will be described below with reference to the drawings. In the following description, a motorcycle will be described as one example of the saddle-straddling type motor vehicle.

### (1) Configuration of Motorcycle

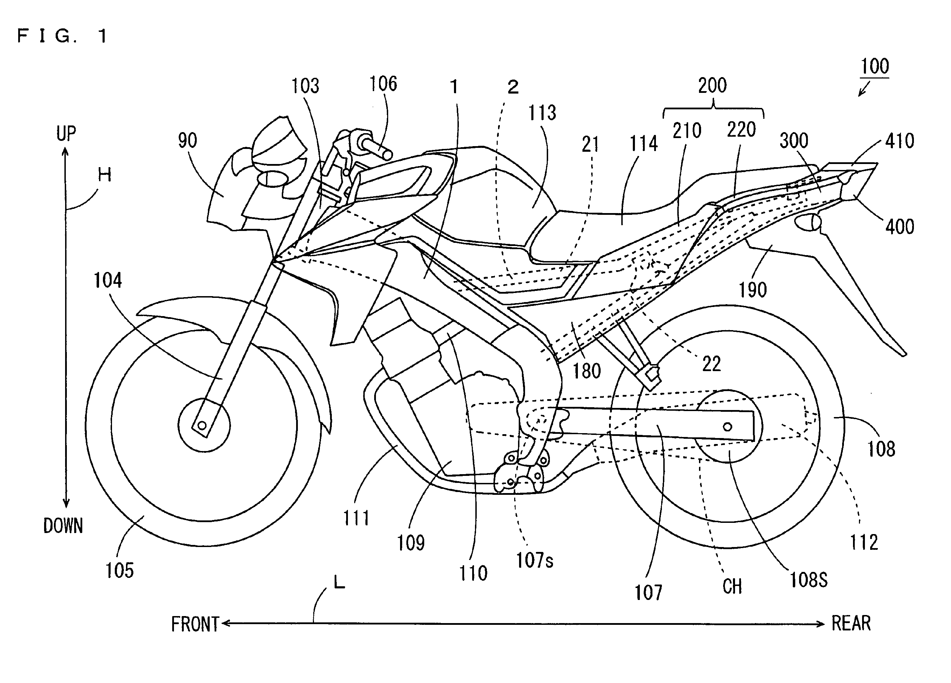

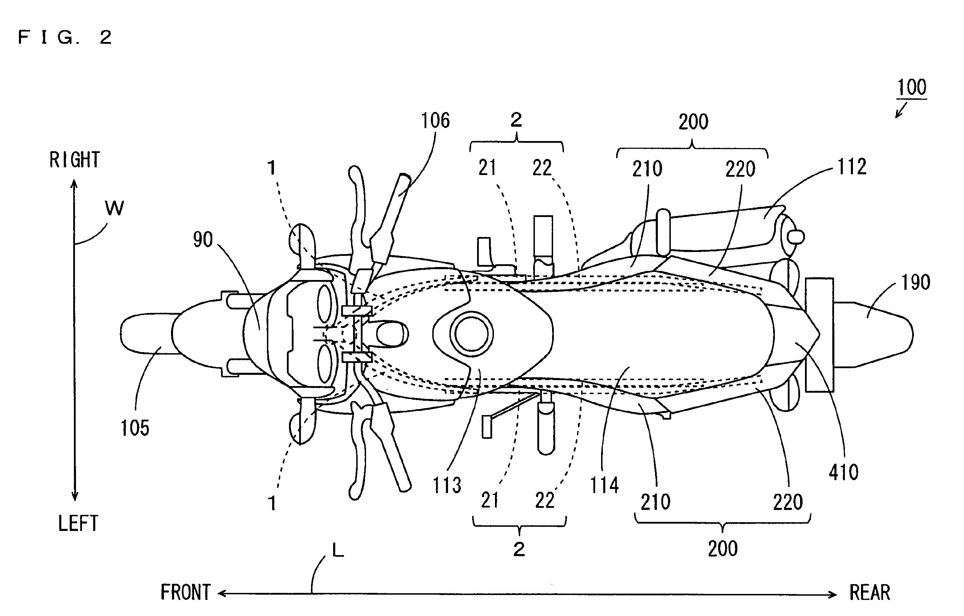

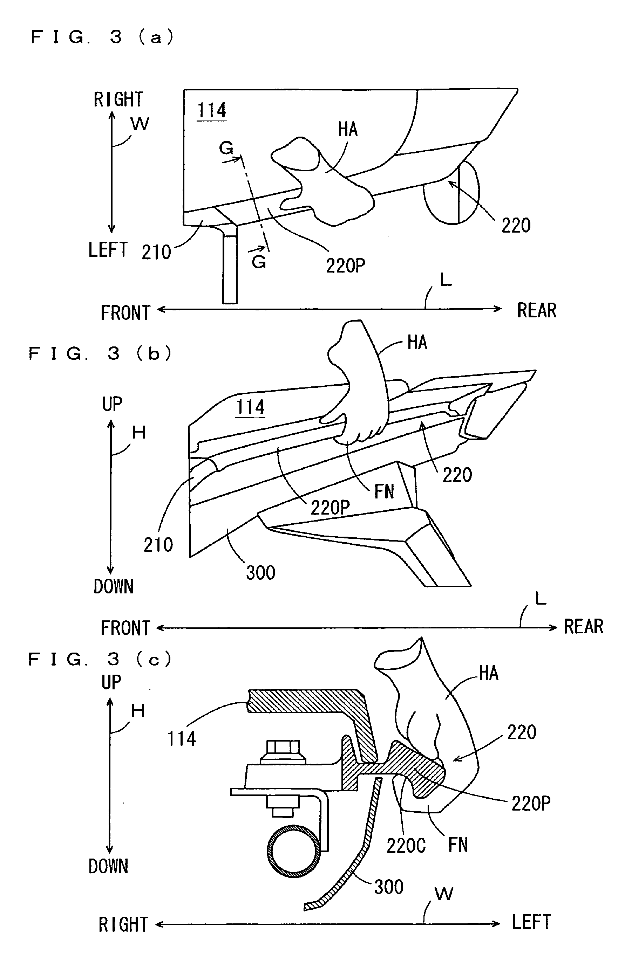

Fig. 1 is a side view of one side of the motorcycle according to one embodiment of the present invention, and Fig. 2 is a plan view of the motorcycle 100 of Fig. 1 as viewed from above. Figs. 1 and 2 show the motorcycle 100 being stood up to be vertical to a road surface. In Fig. 1, the arrows denote the front and rear direction L and the up-and-down direction H of the motorcycle 100. Further, in Fig. 2, the arrows denote the front and rear direction L and the width direction W of the motorcycle 100. In subsequent Figs. 3 to 9, the arrows similarly denote the front and rear direction L, the width direction W and the up-and-down direction H.

As shown in Figs. 1 and 2, the motorcycle 100 includes a pair of right and left main frames 1 and a pair of right and left sub-frames 2. Each of the sub-frames 2 includes an upper frame pipe 21 and a lower frame pipe 22. The pair of upper frame pipes 21 is attached to the substantially central portions of the pair of main frames 1 to extend rearward, respectively. The pair of lower frame pipes 22 is attached to the lower portions of the pair of main frames 1 to be inclined upward rearward, respectively. The rear ends of the pair of lower frame pipes 22 are bonded to the lower ends in the vicinity of the rear ends of the pair of upper frame pipes 21.

A head pipe 103 is provided at the front ends of the pair of main frames 1. A front fork 104 is provided at the head pipe 103 to be swingable to the right and left. A head light 90 is attached in the vicinity of the upper end of the front fork 104. The head light 90 is positioned in front of the head pipe 103. A front wheel 105 is supported at the lower end of the front fork 104 to be rotatable. A handle 106 is attached to the upper end of the head pipe 103.

An engine 109 is provided in the vicinity of the lower ends of the pair of main frames 1. One end of an intake pipe 110 is attached to an intake port of the engine 109, and one end of an exhaust pipe 111 is attached to an exhaust port of the engine 109. A muffler 112 is attached to the other end of the exhaust pipe 111.

Part of the pair of upper frame pipes 21 is positioned above the engine 109. A fuel tank 113 is supported at a position above the engine 109 by the pair of main frames 1 and the pair of upper frame pipes 21. A seat 114 is supported at a position behind the fuel tank 113 by the pair of upper frame pipes 21. The seat 114 in this example is a seat in which two seating portions for two riders are integrally formed and is configured to be attachable and detachable with respect to the pair of upper frame pipes 21. A rider who operates the motorcycle 100 can sit in the front portion of the seat 114. Further, a rider who does not operate the motorcycle 100 can sit in the rear portion of the seat 114.

A rear arm 107 is provided to extend rearward from the lower portions of the pair of main frames 1. The front end of the rear arm 107 is attached to the pair of main frames 1 via a support shaft 107s. The rear end of the rear arm 107 holds a rear wheel 108 and a rear wheel driven sprocket 108S to be rotatable. A chain CH is attached to the rear wheel driven sprocket 108S. The rear arm 107 is swingable by a suspension (not shown) in the up-and-down direction H with the support shaft 107s as a center.

A pair of right and left side covers 200 made of resin is attached to the pair of upper frame pipes 21 to cover part of the pair of upper frame pipes 21 from outside in the width direction W. The pair of side covers 200 includes a pair of right and left front covers 210 and a pair of right and left grip covers 220, respectively.

The pair of grip covers 220 is fixed to the rear portions of the pair of upper frame pipes 21. The pair of front covers 210 is respectively fixed to the pair of grip covers 220 to extend forward from the front ends of the pair of grip covers 220 and fixed to the pair of upper frame pipes 21.

As shown in Fig. 1, a pair of central covers 180 is provided below the pair of front covers 210, respectively. Further, a lower cover 300 is provided below the pair of grip covers 220. The lower cover 300 has a left portion positioned below the left grip cover 220 and extends in the front and rear direction L and a right portion positioned below the right grip cover 220 and extends in the front and rear direction L. The lower cover 300 has the configuration in which the rear end of the left portion and the rear end of the right portion are coupled. A tail light 400 is provided at the rear ends of the pair of side covers 200 and the lower cover 300. A tail light cover 410 is provided at an upper portion of the tail light 400. A cover member 190 is attached to the lower ends of the pair of central covers 180 and the lower cover 300 to cover the entire upper portion of the rear wheel 108 from above the rear wheel 108.

### (2) Function of Pair of Grip Covers

The pair of grip covers 220 functions as grip members, which the rider who sits in the rear portion of the seat 114 can grasp, for example. Figs. 3(a) to 3(c) are diagrams for explaining the function of the grip covers 220.

Fig. 3(a) mainly shows a plan view of part of the seat 114 and the left grip cover 220. Fig. 3(b) mainly shows a side view of part of the seat 114, the left grip cover 220 and the lower cover 300. Fig. 3(c) shows a vertical cross sectional view taken along the line G-G of Fig. 3(a). Further, Figs. 3(a) to 3(c) show a rider's hand HA together with the grip cover 220.

As shown in Figs. 3(a) to 3(c), the grip cover 220 has a projection 220P arranged outside the seat 114 in the width direction W. The projection 220P is formed to extend substantially in the front and rear direction L along the outer end of the seat 114. As shown in Fig. 3(c), a lower recess 220C that extends substantially in the front and rear direction L is formed at the lower surface of the projection 220P.

The rider who sits in the rear portion of the seat 114 can grasp the projection 220P by inserting fingers FN into the lower recess 220C at the lower surface of the projection 220P of the grip cover 220. Thus, the projection 220P and the lower recess 220C of the grip cover 220 function as the grip members.

### (3) Details of Pair of Side Covers and Lower Cover

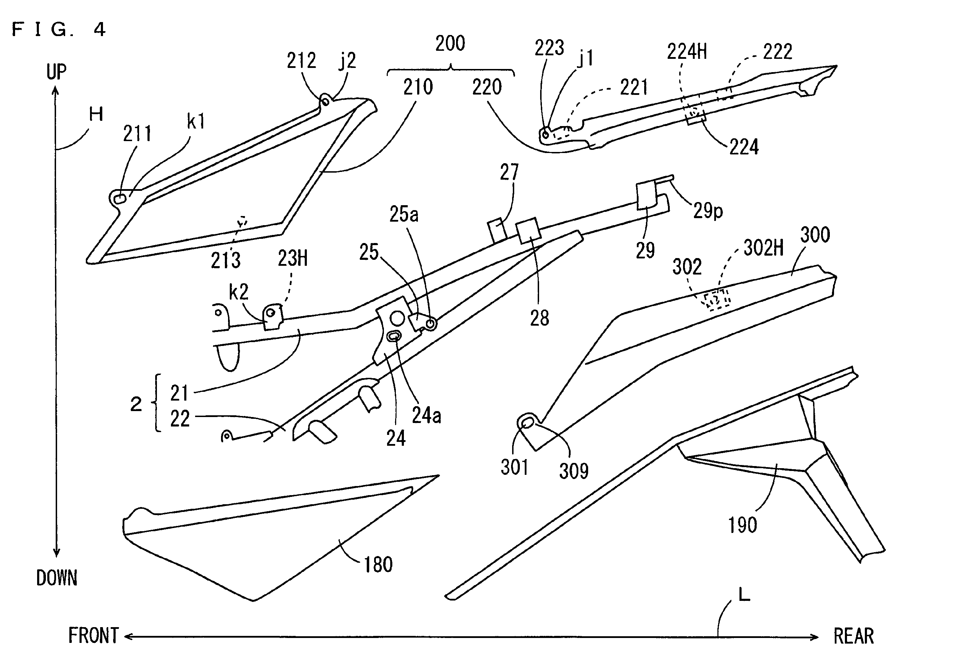

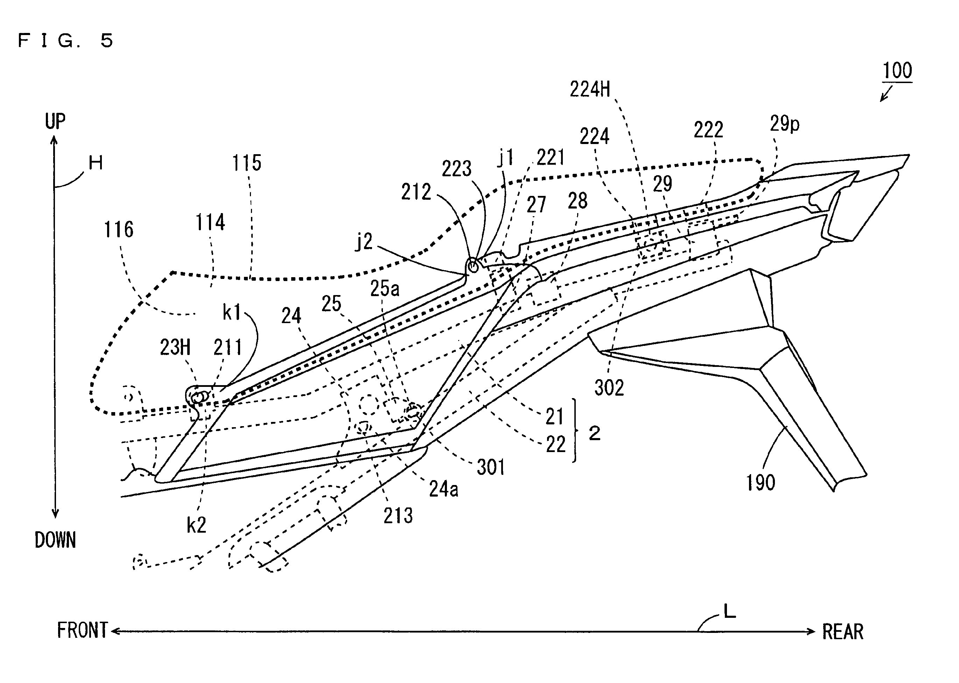

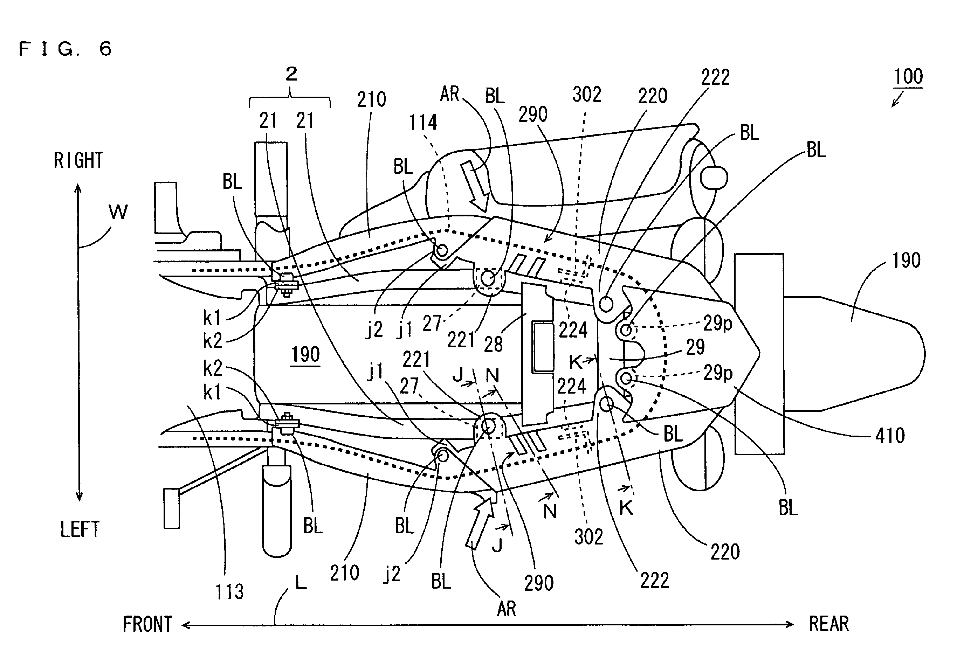

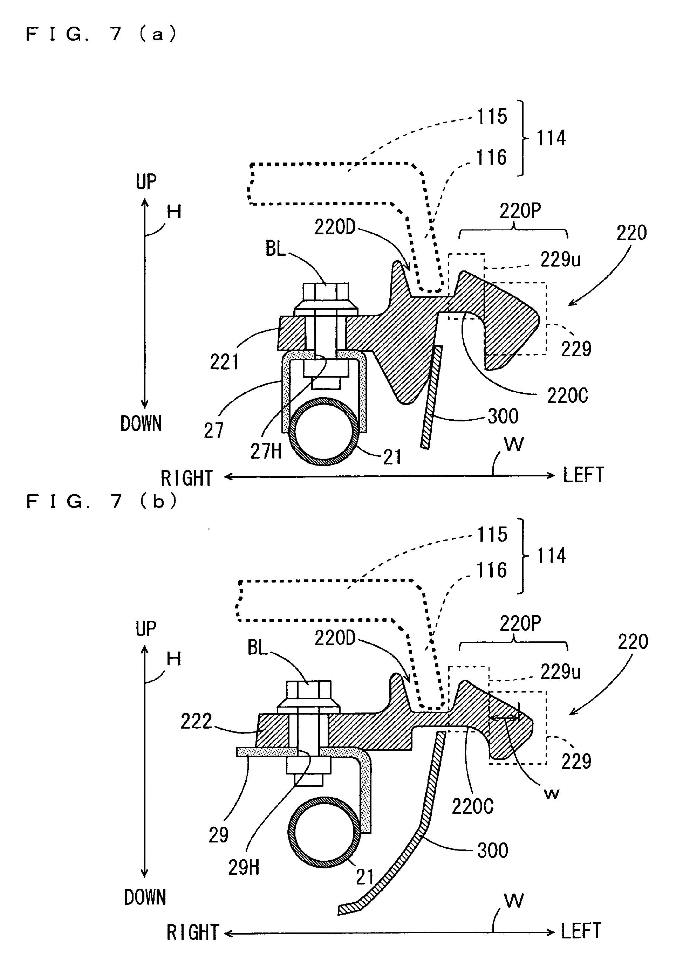

Fig. 4 is a partially exploded side view showing the left sub-frame 2, the left central cover 180, the cover member 190, the left side cover 200 and the lower cover 300. Fig. 5 is a partially enlarged side view of the motorcycle 100 as viewed from the transparent seat 114, and Fig. 6 is a partially enlarged plan view of the motorcycle 100 as viewed from the transparent seat 114. In Figs. 5 and 6, the seat 114 of Figs. 1 and 2 is indicated by the bold dotted line. As shown in Fig. 5 and after-mentioned Figs. 7(a) and 7(b), in the present embodiment, the seat 114 includes a seating surface 115 and a pair of side surfaces 116. Each of the side surfaces 116 is formed to be inclined outward downward from the outer end of the seating surface 115 in the width direction W.

As shown in Figs. 4 and 6, a pair of support pieces k2, a pair of support pieces 24, a pair of support pieces 27, one support piece 28 and one support piece 29 are attached to the side surfaces of the upper frame pipes 21 of the pair of sub-frames 2 from the center to the rear end in this order. The support pieces k2, 24, 27, 28, 29 are formed of a metallic plate.

The pair of support pieces k2 are bonded to the pair of upper frame pipes 21 to project upward, respectively. A through hole 23H is formed at each support piece k2.

Each support piece 24 is arranged at a position at which each upper frame pipe 21 and each lower frame pipe 22 are spaced apart from each other. The upper end and lower end of the left support piece 24 are bonded to the outer side surfaces of the left upper frame pipe 21 and the left lower frame pipe 22, respectively. Similarly, the upper end and the lower end of the right support piece 24 are bonded to the outer side surfaces of the right upper frame pipe 21 and the right lower frame pipe 22, respectively.

A long hole 24a that extends substantially in the front and rear direction L is formed at the support piece 24. A grommet made of rubber is attached to the long hole 24a. Further, the support piece 24 has a projection piece 25. The projection piece 25 is formed to project outward from the outer side surfaces of the upper frame pipe 21 and the lower frame pipe 22. A through hole 25a is formed at the projection piece 25.

A pair of support pieces 27 is bonded to the pair of upper frame pipes 21 to project upward, respectively. A through hole 27H (see Fig. 7(a), described below) is formed at the upper end of each support piece 27.

The support piece 28 extends in the width direction W to connect the pair of upper frame pipes 21 to each other. The one end and the other end of the support pieces 28 are bent downward and bonded by welding to the outer side surfaces of the pair of upper frame pipes 21, respectively.

The support piece 29 extends in the width direction W to connect the pair of upper frame pipes 21 to each other. The one end and the other end of the support pieces 29 are bent downward and bonded by welding to the outer side surfaces of the pair of upper frame pipes 21, respectively. A pair of through holes 29H (see Fig. 7(b), described below) is formed at positions above the pair of upper frames 21 at the support piece 29. Two projections 29p are formed at the rear end of the support piece 29. A through hole is formed at each projection 29p.

A pair of right and left front fixing pieces 309 is formed at the front end of the lower cover 300. A long hole 301, in which the length in the front and rear direction L is larger than the length in the up-and-down direction H, that extends substantially in the front and rear direction L is formed at each front fixing piece 309. A bolt (not shown) is inserted into the through hole 25a and the long hole 301, and a nut is attached to the bolt while the through hole 25a of the projection piece 25 attached to each sub-frame 2 and the long hole 301 of each front fixing piece 309 overlap with each other. Thus, each front fixing piece 309 is fixed to each sub-frame 2.

A pair of attachment pieces 302 is formed at positions slightly behind the center of the lower cover 300 in the front and rear direction L to project inward from the inner surfaces of the right portion and the left portion of the lower cover 300. Each attachment piece 302 has an opposite surface that is opposite to the inner surface of the lower cover 300. A through hole 302H (Fig. 4) is formed at the opposite surface. As shown in Figs. 4 to 6, a central coupling piece 224 that extends downward from the upper end of each grip cover 220 is formed at the inner edge of the substantially center of the grip cover 220. A through hole 224H (Fig. 4) is formed at the central coupling piece 224. A bolt (not shown) is inserted into the through holes 224H, 302H while the through hole 224H (Fig. 4) of the central coupling piece 224 of each grip cover 220 overlaps with the through hole 302H (Fig. 4) of each attachment piece 302 of the lower cover 300. Thus, the central coupling pieces 224 of the pair of grip covers 220 and the pair of attachment pieces 302 of the lower cover 300 are coupled, respectively.

Front coupling pieces k1 are formed in the vicinity of the front ends of the upper ends of the pair of front covers 210, respectively. A long hole 211, in which the length in the front and rear direction L is larger than the length in the up-and-down direction H, that extends substantially in the front and rear direction L is formed at each front coupling piece k1. A bolt BL (Fig. 6) is inserted into the through hole 23H and the long hole 211, and a nut is attached to the bolt BL while the through hole 23H of the support piece k2 attached to each upper frame pipe 21 and the long hole 211 of the front coupling piece k1 of each front cover 210 overlap with each other. Thus, the front coupling piece k1 of each front cover 210 is fixed to each upper frame pipe 21.

Further, a rear coupling piece j2 is formed in the vicinity of the rear end of the upper end of each front cover 210. A through hole 212 is formed at the rear coupling piece j2. Front coupling pieces j1 are formed at the front ends of the pair of grip covers 220, respectively. A through hole 223 is formed at each front coupling piece j1. The bolt BL is inserted into the through holes 212, 223, and a nut is attached to the bolt BL while the through hole 212 of the rear coupling piece j2 of each front cover 210 and the through hole 223 of the front coupling piece j1 of each grip cover 220 overlap with each other. Thus, the rear coupling piece j2 of each front cover 210 is fixed to the front coupling piece j1 of each grip cover 220.

A bar-shaped attachment piece 213 is formed in the vicinity of the lower end of each front cover 210 to extend inward from the inner surface of the front cover 210. As described below, the attachment piece 213 of each front cover 210 is inserted into the long hole 24a of the support piece 24 attached to each sub-frame 2 in assembly of the motorcycle 100.

As shown in Fig. 6, front fixing pieces 221 are formed at positions behind and in the vicinity of the front coupling pieces j1 to project inward. A through hole is formed at each front fixing piece 221. The bolt BL is inserted into the through hole 27H (Fig. 7(a)) and the through hole of the front fixing piece 221, and a nut is attached to the bolt BL while the through hole of the front fixing piece 221 of each grip cover 220 overlaps with the through hole 27H (Fig. 7(a)) of the support piece 27 attached to each upper frame pipe 21. Thus, the front fixing piece 221 of each grip cover 220 is fixed to each upper frame pipe 21.

As shown in Fig. 6, a rear fixing piece 222 that projects inward is formed behind the central coupling piece 224 of each grip cover 220. A through hole is also formed at each rear fixing piece 222. A bolt BL is inserted into the through hole 29H (Fig. 7(b)) and the through hole of the rear fixing piece 222, and a nut is attached to the bolt while the through hole of the rear fixing piece 222 of each grip cover 220 overlaps with each through hole 29H (Fig. 7(b)) of the support piece 29 attached to the pair of upper frame pipes 21. Thus, the rear fixing piece 222 of each grip cover 220 is fixed to each upper frame pipe 21.

Each front cover 210 and each grip cover 220 are fabricated of resin materials different from each other. The strength of the resin material of the grip cover 220 is higher than the strength of the resin material of the front cover 210. A polyamide resin or an ABS (acrylonitrile, butadiene, styrene) resin can be used as the resin material for the front cover 210. In this case, fiber reinforced plastic that includes the resin material used for the front cover 210 can be used as the resin material for the grip cover 220. The fiber reinforced plastic can be fabricated by dispersing fibers such as glass fiber, carbon fiber or the like in resin such as a polyamide resin or an ABS resin.

In this case, only the strength of the grip covers 220 as the grip members of the side covers 200 that include the front covers 210 and the grip covers 220 can be improved. Therefore, it is not necessary to use an expensive resin material with high strength for the entire side covers 200, so that an increase in manufacturing cost of the motorcycle 100 can be prevented.

In the present embodiment, the strength of the resin material is tensile strength of the resin material. The tensile strength of the resin material can be acquired by measuring the tensile strength of the fabricated test piece under a predetermined measurement condition after the test piece made of the resin material is fabricated under a predetermined condition. In this case, the test piece can be fabricated in accordance with the condition specified in ISO (International Organization for Standardization) 2580-2, for example. Further, the tensile strength of the test piece can be measured in accordance with the measurement condition specified in ISO527-1 and ISO527-2.

In assembly of the motorcycle 100, the cover member 190 is first attached to the pair of upper frame pipes 21 and the pair of lower frame pipes 22. Subsequently, the lower cover 300 is attached to the pair of projection pieces 25 that is attached to the pair of sub-frames 2, and the cover member 190.

Next, the left grip cover 220 is attached to the left upper frame pipe 21, and the central coupling piece 224 of the left grip cover 220 is coupled to the left attachment piece 302 of the lower cover 300. Further, the right grip cover 220 is attached to the right upper frame pipe 21, and the central coupling piece 224 of the right grip cover 220 is coupled to the right attachment piece 302 of the lower cover 300.

When the pair of grip covers 220 is attached to the pair of upper frame pipes 21, the tail light 400 and the tail light cover 410 of Fig. 1 are attached between the pair of grip covers 220. Details of the tail light 400 and the tail light cover 410 will be described below.

Subsequently, the pair of front covers 210 is attached to the pair of grip covers 220, respectively. In this case, the attachment piece 213 of each front cover 210 is first inserted into the long hole 24a of each support piece 24. The long hole 24a extends in the front and rear direction L, so that each front cover 210 is temporarily fixed to the support piece 24 while being movable in the front and rear direction L with respect to the upper frame pipe 21 and the grip cover 220. Next, the position of the front cover 210 is adjusted such that the through hole 212 of the rear coupling piece j2 of each front cover 210 and the through hole 223 of the front coupling piece j1 of each grip cover 220 overlap with each other. Thereafter, the rear coupling piece j2 of each front cover 210 is fixed to the front coupling piece j1 of each grip cover 220 by the bolt BL (Fig. 6).

When the pair of grip covers 220 is positioned to extend forward from the front ends of the pair of front covers 210, the long hole 211 of the front coupling piece k1 of each front cover 210 overlaps with the through hole 23H of each support piece k2. In this state, the front coupling piece k1 of each front cover 210 is fixed to the support piece k2 of each grip cover 220 by the bolt BL (Fig. 6).

Finally, the pair of central covers 180 is attached to the pair of lower frame pipes 22, respectively.

Here, even if the shapes of the front cover 210 and the grip cover 220 are designed such that a step is not formed at a boundary portion between the outer surface of each front cover 210 and the outer surface of each grip cover 220, a partial error may occur in the shape of each member due to variations in shape that occurs when the front cover 210 and the grip cover 220 are respectively formed. In this case, at the boundary portion between the outer surface of the front cover 210 and the outer surface of the grip cover 220, a step portion in which the outer surface of the front cover 210 projects outward from the outer surface of the grip cover 220 may be formed, and a step portion in which the outer surface of the grip cover 220 projects outward from the outer surface of the front cover 210 may be formed. Further, a flat portion in which a step is not formed may be formed at the boundary portion between the outer surface of the front cover 210 and the outer surface of the grip cover 220. Therefore, the step portion and the flat portion different from each other are easily formed in an irregular manner at the boundary portion between the outer surface of each front cover 210 and the outer surface of each grip cover 220 due to variations in shape that occurs at the time of formation of the front cover 210 and the grip cover 220. If the shape of the boundary portion is irregular, appearance of the side cover 200 is impaired.

In the present embodiment, as denoted by the outlined arrow AR in Fig. 6, a step in which the outer surface of the grip cover 220 projects outward from the outer surface of the front cover 210 in the width direction W is intentionally formed at the boundary portion between the outer surface of the front cover 210 and the outer surface of the grip cover 220. Thus, the plurality of step portions or a flat portion different from each other are prevented from being formed in an irregular manner at the boundary portion between the outer surface of the front cover 210 and the outer surface of the grip cover 220. As a result, the appearance of the side cover 200 is prevented from being impaired due to the presence or absence of the step and the difference in form of the step.

In the present embodiment, as shown in Fig. 6, fixing portions for fixing of the rear coupling pieces j2 of the pair of front covers 210 and the front coupling portions j1 of the pair of grip covers 220 are arranged inside the pair of side surfaces 116 (Fig. 5 and after-mentioned Figs. 7(a) and 7(b)) of the seat 114. In this case, the fixing portions for fixing of the pair of front covers 210 and the pair of grip covers 220 are covered by the pair of side surfaces 116 of the seat 114. Thus, the fixing portions for fixing of the pair of front covers 210 and the pair of grip covers 220 are not exposed, whereby vandalism such as disassembly of the fixing portions or the like, or theft of a vehicle component member or the like can be prevented.

An error may occur in the fixed positions of the pair of front covers 210 with respect to the pair of upper frame pipes 21 due to an attachment error of the pair of grip covers 220 to the pair of upper frame pipes 21, or variations in size of pairs of grip covers 220 and pairs of front covers 210.

Even in such a case, each of the front covers 210 is fixed to the upper frame pipe 21 by the bolt BL inserted into the long hole 211, so that the error in the fixed position of each front cover 210 with respect to each upper frame pipe 21 is absorbed. Therefore, the pair of grip covers 220 and the pair of front covers 210 that are shifted are prevented from being fixed to the pair of upper frame pipes 21. In particular, the long hole 211 extends substantially in the front and rear direction L. In this case, an error that occurs in the front and rear direction L is easily absorbed.

Similarly, an error may occur in the fixed position of the lower cover 300 with respect to the pair of upper frame pipes 21 due to an attachment error of the lower cover 300 to the pair of upper frame pipes 21, or variations in size of lower covers 300 and cover members 190. Even in such a case, the lower cover 300 is fixed to the upper frame pipe 21 by the bolt BL inserted into the long hole 301, so that the error in the fixed position of the lower cover 300 with respect to the pair of upper frame pipes 21 is absorbed.

### (4) Details of Seat, Pair of Grip Covers and Lower Cover

Fig. 7(a) is a vertical cross sectional view taken along the line J-J of Fig. 6, and Fig. 7(b) is a vertical cross sectional view taken along the line K-K of Fig. 6. In Figs. 7(a) and 7(b), the seat 114 of Figs. 1 and 2 is indicated by the bold dotted line.

An upper recess 220D that extends substantially in the front and rear direction L is formed at the upper surface of each grip cover 220. The lower end of the side surface 116 of the seat 114 is stored in each upper recess 220D.

A lower recess 220C that extends substantially in the front and rear direction L is formed at the lower surface of each grip cover 220. The lower recess 220C is exposed to a space below the grip cover 220 at a position behind the front fixing piece 221. Thus, the rider can grasp the projection 220P at a position behind the front fixing piece 221 of each grip cover 220.

In each grip cover 220, the projection 220P includes an outer wall portion 229 and an upper wall portion 229u. The outer wall portion 229 constitutes an outer wall of the lower recess 220C in the width direction W, and the upper wall portion 229u constitutes the upper wall of the lower recess 220C.

As shown in Fig. 7(b), the thickness w of the outer wall portion 229 in the width direction W increases from the upper end toward the intermediate portion and increases from the lower end toward the intermediate portion in the up-and-down direction H. Thus, strength required as the grip member can be easily ensured at the intermediate portion of the outer wall portion 229 that has the largest thickness.

Further, a dent may occur at the surface of the projection 220P at the time of formation of the grip cover 220 due to a difference in thickness of each portion of the projection 220P that has the lower recess 220C.

In the present embodiment, the surface of the upper wall portion 229u is formed to have a curved surface that protrudes outward. Thus, it is possible to make the dent that occurs at the surface of the projection 220P inconspicuous.

As shown in Fig. 7(b), the outer surface of the lower cover 300 is positioned inside the outermost portion of the grip cover 220 in the width direction W. In this case, it is possible to arrange a vehicle component member in a space between the left portion and the right portion of the lower cover 300, that is, a space between the pair of side covers 200, below the pair of side covers 200 and in the lower cover 300 without increasing the size of the motorcycle 100 in the width direction W. Therefore, flexibility in layout of the vehicle component member can be improved while reduction in size of the side covers 200 is realized.

Further, at least part of the upper end of the lower cover 300 is arranged in the lower recess 220C, that is, above the lower end of the outer wall portion 229, outside the inner end of the lower recess 220C and inside the outer end of the lower recess 220C. In the present embodiment, all portions of the upper end of the lower cover 300 is arranged above the lower end of the outer wall portion 229, outside the inner end of the lower recess 220C and inside the outer end of the lower recess 220C.

In this case, the lower cover 300 is prevented from deformation by the pair of grip covers 220. Specifically, even if at least part of the upper end of the lower cover 300 is deformed inward or outward in the width direction W, the deformation is restricted by the lower recess 220C of each grip cover 220.

### (5) Details of Tail Light and Tail Light Cover

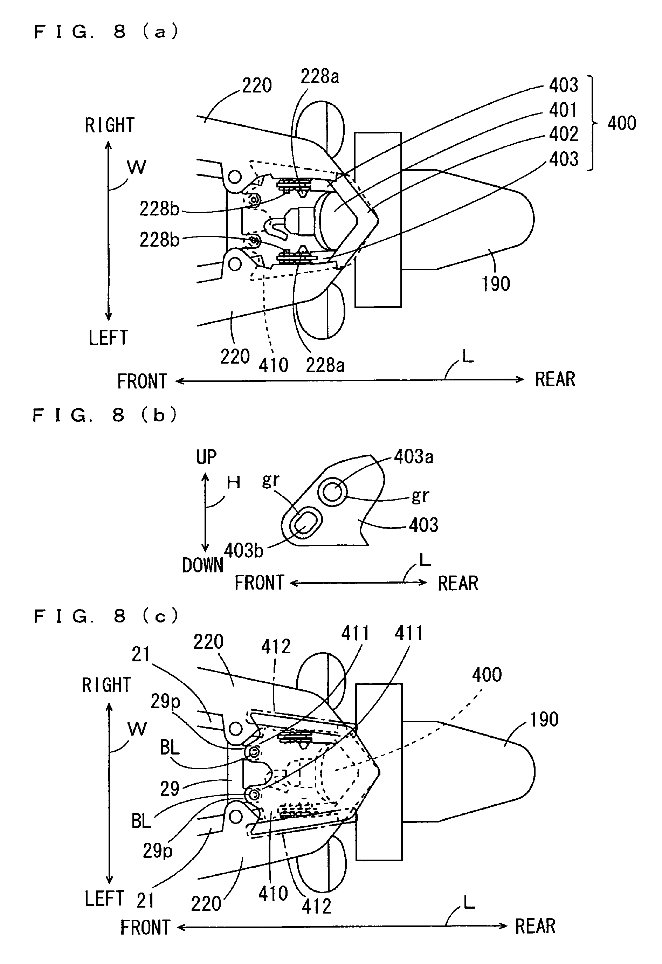

Fig. 8(a) is a partially enlarged plan view of the motorcycle 100 as viewed from the transparent tail light cover 410. In Fig. 8(a), the tail light cover 410 of Figs. 1 and 2 are indicated by the dotted line.

As shown in Fig. 8(a), the tail light 400 includes a light emitter 401, a lens 402 and a pair of support plates 403. The pair of support plates 403 is attached to the both sides of the light emitter 401 to sandwich the light emitter 401 in the width direction W. The lens 402 is attached to the rear ends of the light emitter 401 and the pair of support plates 403.

Two bar-shaped attachment pieces 228a, 228b are formed in the vicinity of the rear ends of the pair of grip covers 220 to respectively extend inward from the inner surfaces of the grip covers 220.

Fig. 8(b) is a partially enlarged side view of the one support plate 403 of Fig. 8(a). As shown in Fig. 8(b), a through hole 403a and a long hole 403b are formed at the support plate 403. The long hole 403b extends to be inclined upward rearward from the front. Grommets gr made of rubber are attached to the through hole 403a and the long hole 403b, respectively.

In attachment of the tail light 400, as shown in Fig. 8(a), the two bar-shaped attachment pieces 228a, 228b of the one grip cover 220 are inserted into the through hole 403a and the long hole 403b of the one support plate 403 of the tail light 400 while the one grip cover 220 is attached to the one upper frame pipe 21. Thus, the tail light 400 is fixed to the one grip cover 220.

Thereafter, the other grip cover 220 is attached to the other upper frame pipe 21. At this time, the two bar-shaped attachment pieces 228a, 228b of the other grip cover 220 are inserted into the through hole 403a and the long hole 403b of the other support plate 403 of the tail light 400. Thus, the tail light 400 is fixed between the pair of grip covers 220.

As described above, the tail light 400 is supported by the bar-shaped attachment pieces 228a, 228b of the pair of grip covers 220 via the grommets gr made of rubber. In this case, the grommets gr made of rubber function as dampers.

In a case in which there are variations in size of tail lights 400, when the tail light 400 is fixed to the pair of upper frame pipes 21, there is a possibility that the tail light 400 cannot be fixed to the pair of upper frame pipes 21 due to an error in an attachment position of the tail light 400. On the other hand, even if there are variations in size of tail lights 400, pairs of grip covers 220 and pairs of upper frame pipes 21, the configuration described above causes the error in the attachment position of the tail light 400 that occurs due to variations in size to be absorbed by the grommets gr. Therefore, assemblage of the tail light 400, the pair of grip covers 220 and the pair of upper frame pipes 21 can be improved.

In particular, in the present embodiment, the one bar-shaped attachment piece 228b of each grip cover 220 is inserted into the long hole 403b of each support plate 403 of the tail light 400. Thus, the error in the attachment position of the tail light 400 is absorbed by the long hole 403b together with the grommet gr. Therefore, larger variations in size of tail lights 400, pairs of grip covers 220 and pairs of upper frame pipes 21 are allowed.

Fig. 8(c) is a partially enlarged plan view of the motorcycle 100 mainly showing the tail light cover 410. As shown in Fig.8(c), two projections 411 are formed at the front end of the tail light cover 410. A through hole is formed at each projection 411.

As described above, the tail light cover 410 made of resin is attached above the tail light 400 while the tail light 400 is attached between the pair of grip covers 220. In this case, the tail light cover 410 is positioned such that the through holes of the two projections 411 of the tail light cover 410 overlap with the through holes of the two projections 29p of the support piece 29.

Thereafter, the bolt BL is inserted into the through hole of the one projection 29p of the support piece 29 and the through hole of the one projection 411 of the tail light cover 410. Similarly, the bolt BL is inserted into the through hole of the other projection 29p of the support piece 29 and the through hole of the other projection 411 of the tail light cover 410. Further, a nut (not shown) is attached to each bolt BL. Thus, the tail light cover 410 is fixed to the pair of upper frame pipes 21 via the support piece 29.

Strip-shaped portions 412 having a constant width that extends inward from the both ends of the tail light cover 410 in the width direction W overlap with partial regions of the pair of grip covers 220, respectively. Thus, the pair of strip-shaped portions 412 of the tail light cover 410 is supported by the inner ends of the upper surfaces of the pair of grip covers 220 and their peripheral portions.

Thus, the tail light cover 410 is supported by the pair of upper frame pipes 21 and the pair of grip covers 220. Thus, the tail light 400 is reliably protected by the tail light cover 410.

### (6) Helmet Hanger

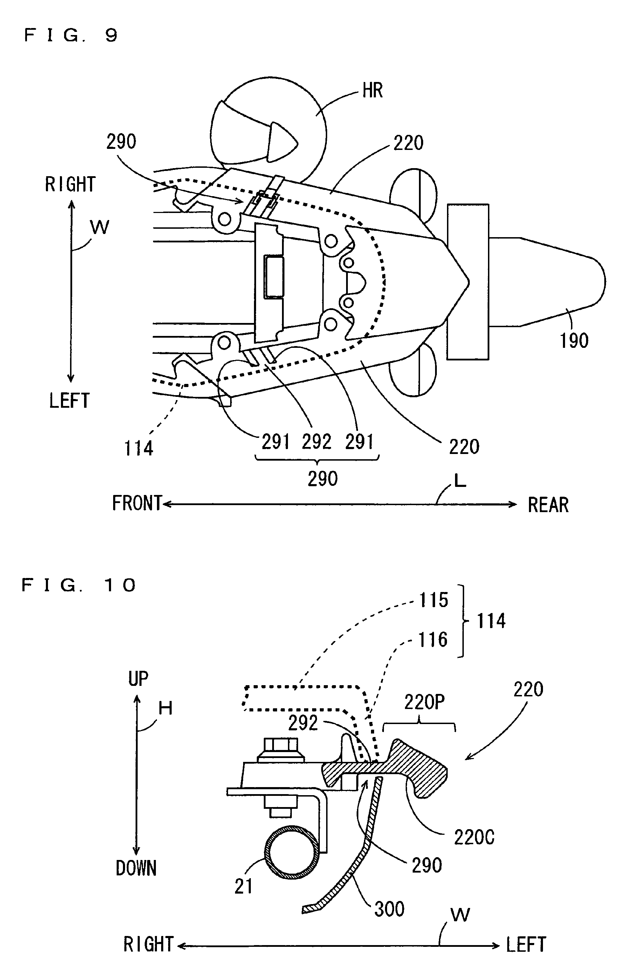

As shown in Fig. 6, a helmet hanger 290 is formed at inner end of each of the right and left grip covers 220. Fig. 9 is a partially enlarged plan view of the motorcycle 100 showing one usage example of the helmet hanger 290 as viewed from the transparent seat 114. In Fig. 9, the seat 114 is indicated by the bold dotted line. Further, Fig. 10 is a vertical cross sectional view taken along the line N-N of Fig. 6.

As shown in Fig. 9, the helmet hanger 290 is constituted by two cutouts 291, spaced apart from each other substantially in the front and rear direction L, formed at the inner end of the grip cover 220, and a projection piece 292 positioned between the cutouts 291.

In this case, the projection piece 292 of the helmet hanger 290 is inserted into a metal hook attached to the chin strap of a helmet HR. Thus, the helmet HR can be hung from the helmet hanger 290.

As shown in Figs. 9 and 10, the helmet hanger 290 is formed inside the projection 220P of each grip cover 220 in the width direction W. In this case, the pair of grip covers 220 can be integrally formed with the helmet hanger 290.

Further, as shown in Figs. 9 and 10, the tip end portions of the helmet hangers 290 are positioned inside the pair of side surfaces 116 of the seat 114 while the seat 114 is closed. Therefore, the metal hook of the helmet HR cannot be removed from the helmet hanger 290 while the seat 114 is closed. Thus, theft of the helmet HR can be prevented.

### (7) Effects

As described above, in the present embodiment, the projections 220P and the lower recesses 220C of the pair of grip covers 220 function as the grip members.

When the bar-shaped grip members are provided at the side covers to project outward from the side covers, a large stress is likely to be exerted on the portions of the grip members to be grasped by the rider and the coupling portions between the grip members and the side covers. Therefore, it is necessary to increase the cross sectional areas of the grasped portions in the grip members and the coupling portions between the grip members and the side covers. Therefore, it is difficult to reduce the size of the grip members.

In contrast, in the pair of grip covers 220 according to the present embodiment, the coupling portions between the portions that function as the grip members and the other portions extend to the entire grip covers 220 in the front and rear direction L. In this manner, the areas of the coupling portions between the portions that function as the grip members and the other portions that have the essential function of the side covers are easily ensured. Further, the portions that function as the grip members are not spaced apart from other portions in the width direction W as compared to the case in which the bar-shaped grip members are provided at the side covers to project outward from the side covers. Therefore, the portions that function as the grip members can be prevented from largely projecting from other portions in the width direction W. As a result, reduction in size of the grip member can be realized while sufficient strength is ensured.

Further, it is not necessary to ensure the strength required as the grip member in the front covers 210. Therefore, the strength for the necessary portions of the side covers 200 can be ensured while an increase in size of the side covers 200 is avoided.

Further, because the pair of grip covers 220 as the grip member is one portion of the pair of side covers 200, the number of the components can be reduced as compared to the case in which the grip members are separately provided.

Further, the projections 220P and the lower recesses 220C that function as the grip members can be simultaneously formed at the time of formation of the grip covers 220, so that the number of assembly steps is reduced compared to the case in which the grip members are separately provided.

As a result, the function as the grip members in which the strength is ensured is realized by the side covers 200 while the size of the side covers 200, the number of the components and the number of the assembly steps can be reduced.

### (8) Other Embodiments

In the embodiment described above, a step in which the outer surface of the grip cover 220 projects with respect to the outer surface of the front cover 210 in the width direction W is formed at the boundary portion between each of the outer surfaces of the pair of front covers 210 and each of the outer surfaces of the pair of grip covers 220. Instead, a step in which the outer surface of the front cover 210 projects with respect to the outer surface of the grip cover 220 in the width direction W may be formed at the boundary portion between each of the outer surfaces of the pair of front covers 210 and each of the outer surfaces of the pair of grip covers 220. Even in this case, the appearance of the side covers 200 is prevented from being impaired.

While the pair of grip covers 220 and the lower cover 300 are individually attached in the vicinity of the rear ends of the pair of upper frame pipes 21 in the embodiment described above, the invention is not limited to this. The pair of grip covers 220 and the lower cover 300 may be fabricated by integral formation. In this case, the number of the components is reduced, and the number of assembly steps of the motorcycle 100 can be further reduced.

While the embodiment described above is an example in which the present invention is applied to the motorcycle, the invention is not limited to this. The present invention may be applied to another saddle-straddling type motor vehicle such as a motor tricycle, an ATV (All Terrain Vehicle) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the embodiments described above, the motorcycle 100 is an example of a saddle-straddling type motor cycle, the seat 114 is an example of a seat, the pair of sub-frames 2 is an example of a seat frame, the pair of side covers 200 is an example of a pair of right and left side covers, the pair of grip covers 220 is an example of a pair of right and left grip covers and the pair of front covers 210 is an example of a pair of right and left front covers.

Further, the projection 220P is an example of a projection, the lower recess 220C is an example of a recess, the lower cover 300 is an example of a lower cover, the seating surface 115 is an example of a seating surface, the pair of side surfaces 116 is an example of a pair of side surfaces, the fixing portions for fixing of the rear coupling pieces j2 of the pair of front covers 210 and the front coupling pieces j1 of the pair of the grip covers 220 are examples of fixing portions for fixing of a pair of front covers and a pair of grip covers.

Further, the long holes 211 formed at the front coupling pieces k1 of the pair of front covers 210 are examples of a long hole, the bolt BL is an example of a fixing member, the outer wall portion 229 of the projection 220P is an example of an outer wall portion and the upper wall portion 229u of the projection 220P is an example of an upper wall portion.

Further, the grommet gr is an example of a damper, the tail light 400 is an example of a tail light, the tail light cover 410 is an example of a tail light cover and the helmet hanger 290 is an example of a helmet hanger.

As each of various constituent elements recited in the claims, various other elements having configurations or functions described in the claims can be also used.

### INDUSTRIAL APPLICABILITY

The present invention can be effectively utilized for a vehicle.

## Claims

1. A saddle-straddling type motor vehicle comprising:
a seat (114);
a seat frame (2) that supports the seat (114); and
a pair of right and left side covers (200) made of resin arranged to cover at least part of the seat frame (2) from outside in a vehicle width direction (W), wherein
the pair of side covers (200) includes
a pair of right and left grip covers (200) fixed to the seat frame (2), and
a pair of right and left front covers (210) respectively fixed to the pair of grip covers (220) to extend forward from front ends of the pair of grip covers (220), and
each of the grip covers (220) has a projection (220P) arranged outside the seat (114) in the vehicle width direction (W) and has a recess (220C) at a lower surface of the projection (220P),
**characterized in that**
a strength of a resin material of the pair of grip covers (220) is higher than strength of a resin material of the pair of front covers (210).

2. The saddle-straddling type motor vehicle according to claim 1, further comprising:
a lower cover (300) provided below the pair of side covers (200), wherein
an outer surface of the lower cover (300) is positioned inside outermost portions of the pair of grip covers (220) in the vehicle width direction (W).

3. The saddle-straddling type motor vehicle according to claim 2, wherein
at least part of an upper end of the lower cover (300) is positioned above lower ends of the recesses (220C) of the pair of grip covers (220), outside inner ends of the recesses (220C) in the vehicle width direction (W) and inside outer ends of the recesses (220C) in the vehicle width direction (W).

4. The saddle-straddling type motor vehicle according to any one of claims 1 to 3, wherein
the seat (114) has a seating surface (115) and a pair of side surfaces (116) that extends downward from an outer end edge of the seating surface (115) in the vehicle width direction (W), and
fixing portions (j1, j2) for fixing of the pair of front covers (210) and the pair of grip covers (220) are arranged inside the pair of side surfaces (116) in the vehicle width direction (W).

5. The saddle-straddling type motor vehicle according to any one of claims 1 to 4, wherein
each of the front covers (210) has a long hole (211), and
each of the front covers (210) is fixed to the seat frame (2) by a fixing member (BL) inserted into the long hole (211).

6. The saddle-straddling type motor vehicle according to claim 5, wherein
the long hole (211) is formed such that a length in the vehicle front and rear direction (L) is larger than a length in the vehicle up-and-down direction (H) and the long hole (211) extends in the vehicle front and rear direction (L).

7. The saddle-straddling type motor vehicle according to any one of claims 1 to 6, wherein
a step in which an outer surface of the grip cover (220) projects with respect to an outer surface of the front cover (210) in the vehicle width direction (W) is formed at a boundary portion between each of outer surfaces of the pair of front covers (210) and each of outer surfaces of the pair of grip covers (220).

8. The saddle-straddling type motor vehicle according to any one of claims 1 to 7, wherein
each grip cover (220) has an outer wall portion (229) that constitutes an outer wall of the recess (220C) in the vehicle width direction (W), and
the outer wall portion (229) has a portion in which a thickness in a horizontal direction increases.

9. The saddle-straddling type motor vehicle according to any one of claims 1 to 8, wherein
each grip cover (220) has an upper wall portion (229u) that constitutes an upper wall of the recess (220C), and
a surface of the upper wall portion (229u) has a curved surface that protrudes outward.

10. The saddle-straddling type motor vehicle according to any one of claims 1 to 9, further comprising:
a tail light (400) supported by the pair of side covers (200) via dampers (gr).

11. The saddle-straddling type motor vehicle according to claim 10, further comprising:
a tail light cover (410) provided above the tail light (400), wherein
the tail light cover (410) is fixed to the seat frame (2) and is supported by the pair of side covers (200).

12. The saddle-straddling type motor vehicle according to any one of claims 1 to 11, wherein
at least one of the pair of grip covers (220) has a helmet hanger (290) inside the projection (220P) in the vehicle width direction (W).

## Patentansprüche

1. Ein Sattel-Grätsch-Typ-Kraftfahrzeug, das folgende Merkmale aufweist:
einen Sitz (114);
einen Sitzrahmen (2), der den Sitz (114) trägt; und
ein Paar einer rechten und linken Seitenabdeckung (200), das aus Harz hergestellt und angeordnet ist, um in einer Fahrzeugbreitenrichtung (W) zumindest einen Teil des Sitzrahmens (2) von außen zu bedecken, wobei:
das Paar von Seitenabdeckungen (200) folgende Merkmale aufweist:
ein Paar einer rechten und linken Griffabdeckung (200), die an dem Sitzrahmen (2) fixiert sind, und
ein Paar einer rechten und linken Vorderabdeckung (210), die jeweils an dem Paar von Griffabdeckungen (220) fixiert sind und sich von Vorderenden des Paars von Griffabdeckungen (220) nach vorne erstrecken, und
wobei jede der Griffabdeckungen (220) einen Vorsprung (220P) aufweist, der in der Fahrzeugbreitenrichtung (W) außerhalb des Sitzes (114) angeordnet ist, und eine Aussparung (220C) an einer unteren Oberfläche des Vorsprungs (220P) aufweist,
**dadurch gekennzeichnet, dass**:
eine Festigkeit eines Harzmaterials des Paars von Griffabdeckungen (220) höher ist als eine Festigkeit eines Harzmaterials des Paars von Vorderabdeckungen (210).

2. Das Sattel-Grätsch-Typ-Kraftfahrzeug gemäß Anspruch 1, das ferner folgendes Merkmal aufweist:
eine untere Abdeckung (300), die unterhalb des Paars von Seitenabdeckungen (200) vorgesehen ist, wobei:
eine äußere Oberfläche der unteren Abdeckung (300) in der Fahrzeugbreitenrichtung (W) innerhalb äußerster Abschnitte des Paars von Griffabdeckungen (220) positioniert ist.

3. Das Sattel-Grätsch-Typ-Kraftfahrzeug gemäß Anspruch 2, bei dem:
zumindest ein Teil eines oberen Endes der unteren Abdeckung (300) oberhalb unterer Enden der Aussparungen (220C) des Paars von Griffabdeckungen (220), in der Fahrzeugbreitenrichtung (W) außerhalb innerer Enden der Aussparungen (220C) und in der Fahrzeugbreitenrichtung (W) innerhalb äußerer Enden der Aussparungen (220C) positioniert ist.

4. Das Sattel-Grätsch-Typ-Kraftfahrzeug gemäß einem der Ansprüche 1 bis 3, bei dem:
der Sitz (114) eine Sitzoberfläche (115) und ein Paar von Seitenoberflächen (116) aufweist, das sich in der Fahrzeugbreitenrichtung (W) von einem äußeren Endrand der Sitzoberfläche (115) nach unten erstreckt, und
Fixierungsabschnitte (j1, j2) zum Fixieren des Paars von Vorderabdeckungen (210) und des Paars von Griffabdeckungen (220) in der Fahrzeugbreitenrichtung (W) innerhalb des Paars von Seitenoberflächen (116) angeordnet sind.

5. Das Sattel-Grätsch-Typ-Kraftfahrzeug gemäß einem der Ansprüche 1 bis 4, bei dem:
jede der Vorderabdeckungen (210) ein langes Loch (211) aufweist, und
jede der Vorderabdeckungen (210) durch ein Fixierungsbauteil (BL), das in das lange Loch (211) eingeführt ist, an dem Sitzrahmen (2) fixiert ist.

6. Das Sattel-Grätsch-Typ-Kraftfahrzeug gemäß Anspruch 5, bei dem:
das lange Loch (211) derart gebildet ist, das eine Länge in der Vorne-Hinten-Richtung des Fahrzeugs (L) größer ist als eine Länge in der Auf-Ab-Richtung des Fahrzeugs (H) und das lange Loch (211) sich in der Vorne-Hinten-Richtung (L) des Fahrzeugs erstreckt.

7. Das Sattel-Grätsch-Typ-Kraftfahrzeug gemäß einem der Ansprüche 1 bis 6, bei dem:
eine Stufe, bei der eine äußere Oberfläche der Griffabdeckung (220) in Bezug auf eine äußere Oberfläche der Vorderabdeckung (210) in der Fahrzeugbreitenrichtung (W) vorsteht, an einem Grenzabschnitt zwischen jeder von äußeren Oberflächen des Paars von Vorderabdeckungen (210) und jeder von äußeren Oberflächen des Paars von Griffabdeckungen (220) gebildet ist.

8. Das Sattel-Grätsch-Typ-Kraftfahrzeug gemäß einem der Ansprüche 1 bis 7, bei dem:
jede Griffabdeckung (220) einen äußeren Wandabschnitt (229) aufweist, der in der Fahrzeugbreitenrichtung (W) eine äußere Wand der Aussparung (220C) bildet, und
der äußere Wandabschnitt (229) einen Abschnitt aufweist, bei dem eine Dicke in einer Horizontalrichtung zunimmt.

9. Das Sattel-Grätsch-Typ-Kraftfahrzeug gemäß einem der Ansprüche 1 bis 8, bei dem:
jede Griffabdeckung (220) einen oberen Wandabschnitt (229u) aufweist, der eine obere Wand der Aussparung (220C) bildet, und
eine Oberfläche des oberen Wandabschnitts (229u) eine gekrümmte Oberfläche aufweist, die nach außen vorsteht.

10. Das Sattel-Grätsch-Typ-Kraftfahrzeug gemäß einem der Ansprüche 1 bis 9, das ferner folgendes Merkmal aufweist:
ein Rücklicht (400), das durch das Paar von Seitenabdeckungen (200) über Dämpfer (gr) getragen wird.

11. Das Sattel-Grätsch-Typ-Kraftfahrzeug gemäß Anspruch 10, das ferner folgendes Merkmal aufweist:
eine Rücklichtabdeckung (410), die oberhalb des Rücklichts (400) vorgesehen ist, wobei:
die Rücklichtabdeckung (410) an dem Sitzrahmen (2) fixiert ist und durch das Paar von Seitenabdeckungen (200) getragen wird.

12. Das Sattel-Grätsch-Typ-Kraftfahrzeug gemäß einem der Ansprüche 1 bis 11, bei dem:
zumindest eine des Paars von Griffabdeckungen (220) in der Fahrzeugbreitenrichtung (W) eine Helmaufhängung (290) innerhalb des Vorsprungs (220P) aufweist.

## Revendications

1. Véhicule à moteur de type à enfourcher, comprenant:
un siège (114);
un châssis de siège (2) qui supporte le siège (114); et
une paire de couvercles latéraux droit et gauche (200) en résine disposés de manière à recouvrir au moins une partie du châssis de siège (2) depuis l'extérieur dans un sens de la largeur du véhicule (W), dans lequel
la paire de couvercles latéraux (200) comporte
une paire de couvercles de préhension droit et gauche (200) fixés au châssis de siège (2), et
une paire de couvercles avant droit et gauche (210) fixés respectivement à la paire de couvercles de préhension (220) de manière à s'étendre vers l'avant à partir des extrémités avant de la paire de couvercles de préhension (220), et
chacun des couvercles de préhension (220) présente une saillie (220P) disposée à l'extérieur du siège (114) dans le sens de la largeur du véhicule (W) et présente un évidement (220C) dans une surface inférieure de la saillie (220P),
**caractérisé par le fait que**
une résistance d'un matériau de résine de la paire de couvercles de préhension (220) est supérieure à la résistance d'un matériau de résine de la paire de couvercles avant (210).

2. Véhicule à moteur de type à enfourcher selon la revendication 1, comprenant par ailleurs:
un couvercle inférieur (300) prévu au-dessous de la paire de couvercles latéraux (200), dans lequel
une surface extérieure du couvercle inférieur (300) est positionnée à l'intérieur des parties extrême extérieures de la paire de couvercles de préhension (220) dans le sens de la largeur du véhicule (W).

3. Véhicule à moteur de type à enfourcher selon la revendication 2, dans lequel
au moins une partie d'une extrémité supérieure du couvercle inférieur (300) est positionnée au-dessus des extrémités inférieures des évidements (220C) de la paire de couvercles de préhension (220), à l'extérieur des extrémités intérieures des évidements (220C) dans le sens de la largeur du véhicule (W) et à l'intérieur des extrémités extérieures des évidements (220C) dans le sens de la largeur du véhicule (W).

4. Véhicule à moteur de type à enfourcher selon l'une quelconque des revendications 1 à 3, dans lequel
le siège (114) présente une surface d'assise (115) et une paire de surfaces latérales (116) qui s'étendent vers le bas depuis un bord d'extrémité extérieur de la surface d'assise (115) dans le sens de la largeur du véhicule (W) et
les parties de fixation (j1, j2) destinées à fixer la paire de couvercles avant (210) et la paire de couvercles de préhension (220) sont disposés à l'intérieur de la paire de surfaces latérales (116) dans le sens de la largeur du véhicule (W).

5. Véhicule à moteur de type à enfourcher selon l'une quelconque des revendications 1 à 4, dans lequel
chacun des couvercles avant (210) présente un trou oblong (211), et
chacun des couvercles avant (210) est fixé au châssis de siège (2) par un élément de fixation (BL) introduit dans le trou oblong (211).

6. Véhicule à moteur de type à enfourcher selon la revendication 5, dans lequel
le trou oblong (211) est formé de sorte qu'une longueur dans la direction avant et arrière du véhicule (L) soit plus grande qu'une longueur dans la direction vers le haut et vers le bas du véhicule (H) et le trou oblong (211) s'étend dans la direction avant et arrière du véhicule (L).

7. Véhicule à moteur de type à enfourcher selon l'une quelconque des revendications 1 à 6, dans lequel
une marche dans laquelle une surface extérieure du couvercle de préhension (220) fait saillie par rapport à une surface extérieure du couvercle avant (210) dans le sens de la largeur du véhicule (W) est formée dans une partie de limite entre chacune des surfaces extérieures de la paire de couvercles avant (210) et chacune des surfaces extérieures de la paire de couvercles de préhension (220).

8. Véhicule à moteur de type à enfourcher selon l'une quelconque des revendications 1 à 7, dans lequel
chaque couvercle de préhension (220) comporte une partie de paroi extérieure (229) constituant une paroi extérieure de l'évidement (220C) dans le sens de la largeur du véhicule (W), et
la partie de paroi extérieure (229) présente une partie dans laquelle une épaisseur dans une direction horizontale augmente.

9. Véhicule à moteur de type à enfourcher selon l'une quelconque des revendications 1 à 8, dans lequel
chaque couvercle de préhension (220) comporte une partie de paroi supérieure (229u) qui constitue une paroi supérieure de l'évidement (220C), et
une surface de la partie de paroi supérieure (229u) présente une surface courbe qui fait saillie vers l'extérieur.

10. Véhicule à moteur de type à enfourcher selon l'une quelconque des revendications 1 à 9, comprenant par ailleurs:
un feu arrière (400) supporté par la paire de couvercles latéraux (200) par l'intermédiaire d'amortisseurs (gr).

11. Véhicule à moteur de type à enfourcher selon la revendication 10, comprenant par ailleurs:
un couvercle de feu arrière (410) prévu au-dessus du feu arrière (400), dans lequel
le couvercle de feu arrière (410) est fixé au châssis de siège (2) et est supporté par la paire de couvercles latéraux (200).

12. Véhicule à moteur de type à enfourcher selon l'une quelconque des revendications 1 à 11, dans lequel
au moins l'un de la paire de couvercles de préhension (220) comporte un crochet pour casque (290) à l'intérieur de la saillie (220P) dans le sens de la largeur du véhicule (W).
